# EUROPÄISCHE PATENTSCHRIFT

(11) **EP 0 876 290 B1**
(45) Veröffentlichungstag und Bekanntmachung des Hinweises auf die Patenterteilung: **12.04.2000**
(21) Anmeldenummer: 97915257.6
(22) Anmeldetag: 16.01.1997
(51) Int. Cl.: B65G 27/02, F25D 13/06

(54) **WENDELFÖRDERER**
HELICAL CONVEYER
TRANSPORTEUR HELICOIDAL

(30) Priorität: 24.01.1996 DE 19602462
(43) Veröffentlichungstag der Anmeldung: 11.11.1998
(73) Patentinhaber: Schenck Process GmbH, 64293 Darmstadt (DE)
(72) Erfinder: MAY, Karl, D-61118 Bad Vilbel (DE); LOHE, Rainer, D-64846 Gross-Zimmern (DE); SCHLAG, Eugen, D-64291 Darmstadt (DE); SÄTTLER, Heinz, D-67229 Geroldheim (DE); BUSCH, Klaus, D-64291 Darmstadt (DE)
(74) Vertreter: Behrens, Helmut, Dipl.-Ing.
(86) Internationale Anmeldenummer: DE9700066
(87) Internationale Veröffentlichungsnummer: WO9727130

(56) Entgegenhaltungen:
- DE-B- 1 080 927
- DE-B- 1 110 569
- US-A- 2 690 835
- US-A- 2 805 841
- US-A- 4 858 749

## Beschreibung

Die Erfindung betrifft einen Wendel förderer mit einem zylinderförmigen Gehäuse, das einen Zylindermantel, eine untere Eingangsöffnung, und eine obere Ausgangsöffnung aufweist, wobei an der Innenoberfläche des Zylindermantels eine Wendelbahn angeordnet ist, die von der Eingangsöffnung zur Ausgangsöffnung führt.

Ein derartiger Wendel förderer ist aus der DE-PS 97 43 12 bekannt. Mit einem solchen Förderer wird Material von einem unteren auf ein oberes Niveau befördert. Dazu wird der Wendelförderer in Schwingungen versetzt.

Bisher wurden solche Wendelförderer nur zum Transport von leicht handhabbarem Material eingesetzt.

Der Erfindung lag die Aufgabe zugrunde, einen Wendel förderer anzugeben, der auch für den Transport brennbarer oder explosiver Schüttgüter, die eine hohe Temperatur aufweisen können, geeignet ist. Ein solches Schüttgut kann beispielsweise Schwelreststoff sein, der in der aus der EP 0 302 310 B1 bekannten Schwel-Brenn-Anlage anfällt und dort zu einer Hochtemperatur-Brennkammer transportiert werden muß. Dabei ist ein Höhenunterschied zu überwinden, wofür der Einsatz eines Wendelförderers geeignet ist.

Die Aufgabe wird gemäß Anspruch 1 gelöst.

Damit wird der Vorteil erzielt, daß das Schüttgut während des Transportes im Wendelförderer gekühlt wird, woßdurch die Gefahr einer Entzündung oder sogar einer Explosion deutlich reduziert werden kann. Der Wendelförderer nach der Erfindung ist also besonders für den Transport von heißen Schüttgütern geeignet, die leicht entzündet werden können.

Das Gehäuse des Wendelförderers ist aus Modulen aufgebaut. Das unterste Modul weist dabei die Eingangsöffnung und den unteren Teilabschnitt der Wendelbahn auf. Das oberste Modul weist die Ausgangsöffnung und den oberen Teilabschnitt der Wendelbahn auf. Die übrigen Module sind gleichartig aufgebaut, wobei jedes der übrigen Module einen Teilabschnitt der Wendelbahn aufweist.

Mit dem Aufbau aus Modulen wird der Vorteil erzielt, daß die Höhe des Wendelförderers verändert werden kann. Die niedrigste Variante kann nur aus dem untersten und dem obersten Modul bestehen. Weitere Varianten können aufgebaut werden, indem ein oder mehrere der übrigen Module zwischen dem untersten und dem obersten Modul eingefügt werden. Die maximale Höhe des Wendelförderers ist dabei durch die mechanische Stabilität des Wendelförderers begrenzt.

Beispielsweise ist der Kühlkanal jedes Moduls mit einem eigenen Kühlwasserkreislauf verbunden. Dadurch erübrigt sich, daß beim Zusammenbau der Module auch die Kühlkanäle dicht miteinander verbunden werden müssen.

Am unteren Boden des Gehäuses ist beispielsweise ein Kegel derart angeordnet, daß er mit der Spitze in den Raum innerhalb der Wendelbahn hinein ragt. Insbesondere befindet sich die Spitze des Kegels auf der Mittelachse des Gehäuses. Mit diesem'Kegel wird der Vorteil erzielt, daß Schüttgut, das während des Transportes von der Wendelbahn herunter fällt, nicht auf dem Boden des Wendelförderers liegen bleibt, sondern zum Beginn der Wendelbahn hin gelangt und dann erneut nach oben gefördert wird.

Der Raum innerhalb der Wendelbahn ist beispielsweise begehbar, sodaß eine Wartung während des Stillstandes der Anlage möglich ist.

Der Wendelförderer nach Erfindung ist insbesondere für den Transport heißer, brennbarer Schüttgüter, z.B. für den Transport von heißen Schwelreststoff, geeignet.

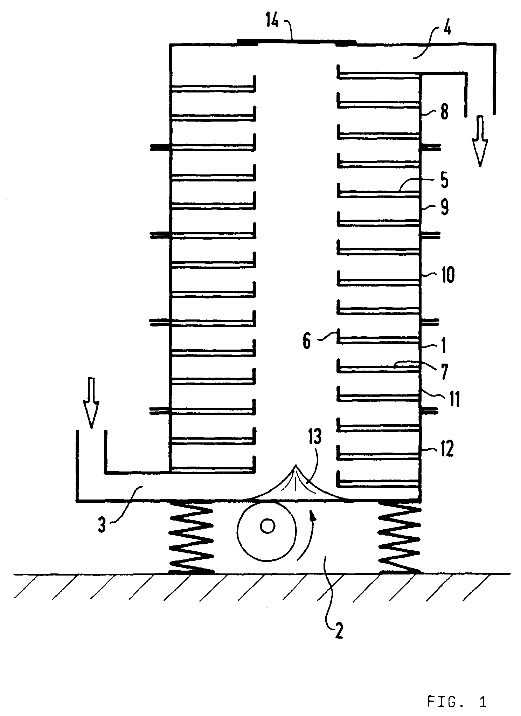

Ein Ausführungsbeispiel für einen Wendel förderer nach der Erfindung wird anhand der Zeichnung näher erläutert:

Die Zeichung zeigt einen Wendelförderer mit einem Gehäuse 1, das auf einer als solchen bekannten Vorrichtung 2 zum Bewegen des Wendelförderers ruht. Das Gehäuse 1 ist zylinderförmig und steht auf einer seiner Stirnflächen. Eine Eingangsöffnung 3 befindet sich unten seitlich am Gehäuse 1. Eine Ausgangsöffnung 4 befindet sich oben seitlich am Gehäuse 1. Von der Eingangsöffnung 3 zur Ausgangsöffnung 4 führt eine Wendelbahn 5, die an der Innenoberfläche des Zylindermantels des Gehäuses 1 angeordnet ist. Auf dieser Wendelbahn 5 wird das zu transportierende Schüttgut bedingt durch die Bewegungen des Wendelförderers nach oben transportiert. Die Wendelbahn 5 weist eine Bordwand 6 auf, durch die weitgehend verhindert wird, daß das zu tranportierende Gut von der Wendelbahn 5 herunter fällt. Die Wendelbahn 5 weist auch einen doppelten Boden auf, durch den zusammen mit der Bordwand 6 und der Gehäusewand ein Kühlkanal 7 gebildet wird. Durch diesen Kühlkanal 7 kann ein Kühlmittel, z.B. Wasser, geleitet werden. Dadurch wird das heiße Schüttgut abgekühlt und es kann eine Verbrennung oder Explosion im Wendelförderer vermiden werden.

Der Wendelförderer ist aus Modulen 8 - 12 aufgebaut. Das unterste Modul 12 umfaßt die Eingangsöffnung 3 und den untersten Teilabschnitt der Wendelbahn 5. Das oberste Modul 8 umfaßt die Ausgangsöffnung 4 und den obersten Teilabschnitt der Wendelbahn 5. Alle übrigen Module 9 - 11 umfassen nur einen Teilabschnitt der Wendelbahn 5. Statt der gezeigten drei übrigen Module 9 - 11 kann eine andere Anzahl derartiger Module oder auch kein solches Modul vorhanden sein. Dadurch können Wendelförderer unterschiedlicher Höhe mit einfachen Mitteln aufgebaut werden.

Der Kühlkanal 7 kann an einen nicht gezeigten Kühlkreislauf angeschlossen sein. Es kann jedoch auch für den Kühlkanal 7 jedes Moduls 8 - 12 ein eigener Kühlkreislauf vorgesehen sein.

Am unteren Boden des Gehäuses 1 ist ein Kegel 13 angeordnet, der mit der Spitze in den Raum innerhalb der Wendelbahn 5 hinein ragt. Mit Hilfe dieses Kegels 13 gelangt Schüttgut, das trotz der Bordwand 6 von der Wendelbahn 5 herunter fällt wieder zum unteren Anfang der Wendelbahn 5 zurück.

Der Raum innerhalb der Wendelbahn 5 kann begehbar sein. Dazu befindet sich an der oberen Stirnwand des Gehäuses 1 ein Dekkel 14.

## Patentansprüche

1. Wendelförderer mit einem zylinderförmigen Gehäuse (1), das einen Zylindermantel, eine untere Eingangsöffnung (3) und eine obere Ausgangsöffnung (4) aufweist, wobei an der Innenoberfäche des Zylindermantels eine Wendelbahn (5) angeordnet ist, die von der Eingangsöffnung (3) zur Ausgangsöffnung (4) führt,
**dadurch gekennzeichnet**, daß die Wendelbahn (5) einen doppelten Boden aufweist, der Teil eines Kühlkanals (7) ist, daß das Gehäuse (1) aus Modulen (8 - 12) aufgebaut ist, daß das unterste Modul (12)die Eingangsöffnung (3) und den unteren Teilabschnitt der Wendelbahn (5) und das oberste Modul (8) die Ausgangsöffnung (4) und den oberen Teilabschnitt der Wendelbahn (5) aufweist, und daß die übrigen Module (9 - 11) jeweils einen Teilabschnitt der Wendelbahn (5) aufweisen.

2. Wendelförderer nach Anspruch 1,
**dadurch gekennzeichnet**, daß die Anzahl der übrigen Module (9 - 11) variabel ist.

3. Wendelförderer nach Anspruch 2,
**dadurch gekennzeichnet**, daß der Kühlkanal (7) jedes Moduls (8 - 12) mit einem eigenen Kühlkreislauf verbunden ist.

4. Wendelförderer nach einem der Ansprüche 1 bis 3,
**dadurch gekennzeichnet**, daß am unteren Boden des Gehäuses (1) mit der Spitze in den Raum innerhalb der Wendelbahn (5) hinein ragend ein Kegel (13) angeordnet ist.

5. Wendelförderer nach einem der Anprüche 1 bis 4,
**dadurch gekennzeichnet**, daß der Raum innerhalb der Wendelbahn (5) begehbar ist.

## Claims

1. A helical conveyer having a cylindrical housing (1) which comprises a cylindrical casing, a lower inlet opening (3) and an upper outlet opening (4), wherein a helical track (5) extending from the inlet opening (3) to the outlet opening (4) is disposed on the inner surface of the cylindrical casing,
characterised in that the helical track (5) comprises a double-walled base which is part of a cooling channel (7), that the housing (1) is built up from modules (8 - 12), that the lowermost module (12) incorporates the inlet opening (3) and the lower sectional part of the helical track (5) whilst the uppermost module (8) incorporates the outlet opening (4) and the upper sectional part of the helical track (5), and that the remaining modules (9 - 11) each incorporate a sectional part of the helical track (5).

2. A helical conveyer in accordance with Claim 1,
characterised in that the number of said remaining modules (9 - 11) is variable.

3. A helical conveyer in accordance with Claim 2,
characterised in that the cooling channel (7) of each module (8 - 12) is connected to its own separate coolant circulating system.

4. A helical conveyer in accordance with any of the Claims 1 to 3, characterised in that a cone (13) is disposed on the lower base of the housing (1) with its peak projecting into the space within the helical track (5).

5. A helical conveyer in accordance with any of the Claims 1 to 4, characterised in that the space within the helical track (5) is accessible.

## Revendications

1. Transporteur hélicoïdal avec un carter (1) de forme cylindrique qui présente une enveloppe cylindrique, une ouverture d'entrée inférieure (3) et une ouverture de sortie supérieure (4), une bande hélicoïdale (5), qui mène de l'ouverture d'entrée (3) à l'ouverture de sortie (4), étant disposée sur la surface intérieure de l'enveloppe cylindrique,
caractérisé en ce que la bande hélicoïdale (5) présente un double fond qui fait partie d'un canal de refroidissement (7), en ce que le carter (1) est constitué de modules (8 à 12), en ce que le module le plus bas (12) présente l'ouverture d'entrée (3) ainsi que le segment inférieur de la bande hélicoïdale (5) et le module le plus haut (8) présente l'ouverture de sortie (4) ainsi que le segment supérieur de la bande hélicoïdale (5) et en ce que les autres modules (9 à 11) présentent chacun un segment de la bande hélicoïdale (5).

2. Transporteur hélicoïdal selon la revendication 1,
caractérisé en ce que le nombre des autres modules (9 à 11) est variable.

3. Transporteur hélicoïdal selon la revendication 2,
caractérisé en ce que le canal de refroidissement (7) de chaque module (8 à 11) est relié à son propre circuit de refroidissement.

4. Transporteur hélicoïdal selon l'une des revendications 1 à 3,
caractérisé en ce que sur le fond inférieur du carter (1) est disposé un cône (13) dont le sommet pénètre à l'intérieur de l'enceinte de la bande hélicoïdale (5).

5. Transporteur hélicoïdal selon l'une des revendications 1 à 4,
caractérisé en ce que l'on peut marcher dans l'enceinte intérieure à la bande hélicoïdale (5).
